# EUROPEAN PATENT SPECIFICATION

(11) **EP 0 848 727 B1**
(45) Date of publication and mention of the grant of the patent: **22.12.1999**
(21) Application number: 96929503.9
(22) Date of filing: 05.09.1996
(51) Int. Cl.: C08K 3/02, C08G 59/30

(54) **THERMALLY STABLE HEXABROMOCYCLODODECANE FIRE RETARDANTS**
THERMISCH STABILE FLAMMHEMMNENDE HEXABROMOCYCLODODECANE
PRODUITS IGNIFUGES DU TYPE HEXABROMOCYCLODODECANE THERMIQUEMENT STABLES

(30) Priority: 07.09.1995 IL 11520495; 06.11.1995 IL 11588195
(43) Date of publication of application: 24.06.1998
(73) Proprietor: Bromine Compounds Ltd., Beer-Sheva 84101 (IL)
(72) Inventor: SCHEINERT, Jacob, 84965 Omer (IL); BAR-YAAKOV, Yoav, 84845 Beer-Sheva (IL); GEORLETTE, Pierre, 84965 Omer (IL)
(74) Representative: Ferreccio, Rinaldo
(86) International application number: IL9600100
(87) International publication number: WO9709374

(56) References cited:
- DE-A- 3 402 539
- CHEMICAL ABSTRACTS, vol. 116, no. 16, 20 April 1992 Columbus, Ohio, US; abstract no. 153122, SHOWA DENKO: "fireproof and tough resin compositions" XP002018901 & JP,A,03 237 148 (SHOWA DENKO) 23 October 1991
- DATABASE WPI Derwent Publications Ltd., London, GB; AN 85-219504 XP002018904 & JP,A,60 139 736 (DAIICHI KOGYO SEIYAKU) , 24 July 1985
- CHEMICAL ABSTRACTS, vol. 123, no. 16, 16 October 1995 Columbus, Ohio, US; abstract no. 201039, L. UTEVSKII, E.A.: "Influence of bromine- containing fire retardants on the processing and properties of plastics." XP002018902 & IND. CHEM. LIBR., no. 7, 1995, pages 323-340,

## Description

### Field of the Invention

This invention refers to hexabromocyclododecane (hereinafter HBCD) fire retardants, having improved thermal stability and to polymeric compositions comprising said fire retardants. More particularly it relates to such fire retardants comprising HBCD and halogenated epoxy resins as thermal stabilizers of the HBCD.

### Background of the Invention

Hexabromocyclododecane (HBCD) is a flame or fire retardant thereinafter sometimes abbreviated as FR) widely used in polystyrene foams. One of the limitations of HBCD is its low thermal stability. A good thermal stability is particularly important when plastic goods are manufactured by extrusion of polystyrene foams or by injection molding of dense high impact polystyrene and polypropylene. Common grades of HBCD are starting to decompose thermally at about 150°C, and to avoid corrosion of the processing equipment it is necessary to add large quantities (usually more than 5% by weight) of expensive thermal stabilizers. Such thermal stabilizers are lead dibasic phthalate, tin maleates, epoxies and polyepoxide compounds. One of the problems with these stabilizers is health hazards which limit their use. For instance, a polyepoxide such as the tris(2,3,-epoxypropyl)isocyanurate (TEPIC), which is potentially carcinogenic, must be used with great precaution. Further, the use of lead stabilizers is often banned or strictly limited in many industrialized countries.

Another way to obtain HBCD with better thermal stability is to produce a purified grade known as high-melting one, which is more expensive.

The HBCD grades having improved thermal stability, known in the prior art, can be processed usually at temperatures up to 200-210°C provided the time during which they are exposed to such temperatures is short enough.

Nevertheless, even said improved thermal stability is not sufficient for many applications.

It is a purpose of this invention to provide grades of HBCD fire retardants having better thermal stability than those of the prior art, thereby permitting the use of higher processing temperatures and /or longer residence times at high temperature.

It is another purpose of this invention to produce polymeric compositions, in particular polystyrene or polyolefin compositions, having improved thermal and color stability.

Other purposes and advantages of this invention will appear as the description proceeds.

### Summary of the Invention

The purposes of the invention are surprisingly achieved by using, as thermal stabilizers for flame retardant compositions comprising HBCD, epoxy resins which are halogen-substituted (halogen being bromine or chlorine), said halogenated resins having an epoxy equivalent in the range between 150 and 800 g/eq.

The term epoxy equivalent, per standard nomenclature, refers to the molecular weight of a substance divided by the number of epoxy groups contained in said substance.

Typically, said resins are selected from the group consisting essentially of halogenated bisphenolic epoxy resins. halogenated phenol novolac epoxy resins, halogenated cresol novolac epoxy resins, halogenated resorcinol epoxy resins, halogenated hydroquinone epoxy resins, halogenated bisphenol A novolac epoxy resins, halogenated methyl resorcinol epoxy resins, halogenated resorcinol novolac epoxy resins, etc. Most preferred are halogenated bisphenolic epoxy resins, characterized by an average degree of polymerization in the range between 0 to 4. Dibromobisphenol A, tetrabrombisphenol A, dichloro-bisphenol A, tetrachlorobisphenol A, dibromobisphenol F, tetrabromobisphenol F, dichlorobisphenol F, tetrachlorbisphenol F, dibromobisphenol S and tetrabromobisphenol S epoxy resins are typical examples of halogenated bisphenolic epoxy resins of the above defined most preferred group. A, F and S are acceptable notations for describing the bridge connecting the phenols in the bisphenol moiety. A, F and S designate a bridge formed by the condensation of two phenols rings with acetone, formaldehyde and sulfide, respectively.

Tetrahalobisphenol A diglycidyl ethers having the general formula 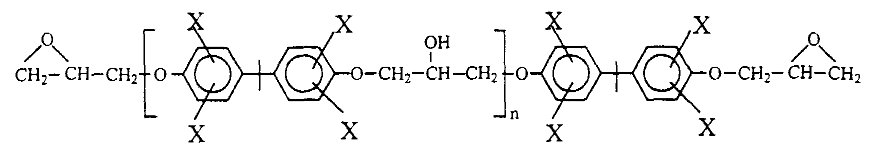 wherein n designates the average degree of polymerization, X is halogen , said resin having an average molecular weight not higher and preferably lower than 1600 g/mole, and wherein n, the average degree of polymerization can have any suitable value, provided it does not lead to an average molecular weight exceeding the said 1600 g/mole, are the most favored epoxy resins according to the present invention. Typically, n is comprised between 0 to 2, inclusive.

Tetrabromobisphenol A diglycidyl ethers, having the general formula 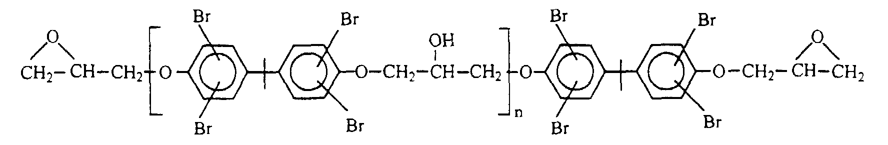 are yet even more favored epoxy resins according to the present invention, wherein n designates the average degree of polymerization, said resin having an average molecular weight not higher and preferably lower than 1600 g/mole, and wherein n, the average degree of polymerization can have any suitable value, provided it does not lead to an average molecular weight exceeding the said 1600 g/mole. Typically, n is comprised between 0 to 2, inclusive.

Processes for the preparation of the above described resins are described, for instance, in Polymer Synthesis, Vol. 1, S.R. Sandler and W. Karo, Academic Press Inc., ISPN 0-12-618502, pp. 80-81.

A novel crystalline form of Tetrabromobisphenol A diglycidyl ethers of the general formula 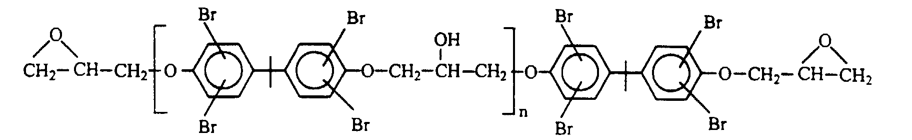 wherein n is comprised between 0 and 0.2, having an average molecular weight of about 700g/mole and an epoxy equivalent weight of 320 to 380 g/eq, characterized by the presence, in the diffraction pattern, of the following seven strong diffraction peaks:

| **d-value, Å** |
|---|
| 9.85 |
| 9.66 |
| 4.12 |
| 4.06 |
| 4.04 |
| 3.96 |
| 3.91 |

and by a softening point of about 100°C to 120°C, was found to be particularly useful to serve as heat stabilizer for HBCD. The preparation of this crystalline form is illustrated hereinafter. Said novel crystalline form is the subject of a copending patent application of the same applicant herein.

It was surprisingly found that a significant increase in the thermal stability of HBCD is obtained when it is provided in a composition containing halogenated epoxy resins, compared with a similar composition of HBCD which contains non halogenated epoxies. The term "similar" refers to the content of the epoxy in the composition, which would be expected by skilled person to be the parameter which governs the thermal stability of the final HBCD composition. The fact that halogenated epoxy resins are superior to non- halogenated polyepoxide resins, in that they confer to HBCD compositions an improved thermal stability, for the same epoxy content in the compositions, constitutes a surprising aspect of the present invention.

Another completely unexpected effect according to the present invention involves the average molecular weight of the halogenated epoxy resin used to increase the thermal stability of the HBCD composition. Surprisingly, a better thermal stabilization for HBCD plural is reached when lower molecular weight halogenated epoxy resins are comprised therein, rather than higher weight ones, for a given epoxy content. The man of the art would have expected the contrary, since it appears logical to choose, as a thermal stabilizer component for an arbitrary composition, a substance which, a priori, has a higher degree of thermal stability in itself, and in the field of halogenated epoxy resins, it is known that the higher the average molecular weight of a given resin, the higher its thermal stability: see "F-2000 Series of brominated polymeric additives (BPA), for polyamides, thermoplastic polyesters and thermosetting resins", by R. Minke, Z. Nir and Y. Bar Yaacov, in "Flame retardants '83". Preferably, according to the invention, the above-identified most favorite brominated epoxy resin used have an average molecular weight not higher and preferably lower than 1600 g/mole and more preferably comprised between 300 and 1500 g/mole.

The invention therefore, comprises flame retardant (hereinafter, sometimes, FR) compositions comprising at least 5% and preferably from 10 to 60% of at least one halogenated epoxy resin, as hereinbefore defined, having the aforesaid characteristics, and, correspondingly, not more than 95% and preferably from 40 to 90% of HBCD. All percentages, in this application, are by weight, unless otherwise specified. The FR compositions may also comprise FR synergists, such as antimony trioxide, zinc borates, magnesium oxide or hydroxide, and other known FR synergists. The aforesaid percentages will refer, in that case, to the aggregate amount of halogenated epoxy resins and HBCD, viz., the halogenated epoxy resins and HBCD will be in the relative proportion of at least 5/95 and preferably from 10/90 to 60/40. The aggregate amount of halogenated epoxy resins and HBCD will be, in that case, at least 20% and preferably between 25 and 90% of the total weight of the FR composition. This includes also compositions of flame retardants masterbatch concentrates, i.e., previously prepared mixtures which will usually comprise high presentage of said compositions (together with a base material), and may be used as additives for various products.

Said fire retardant compositions, comprising halogenated epoxy resins, are thermally stable and improve the thermal stability, particularly in processing, of the polymeric compositions to which they are added, to a greater extent than the HBCD compositions known in the art. Furthermore, brominated epoxy resins are also much less health hazardous than other compounds which the art has suggested to add to HBCD to improve its thermal stability. It should also be noted that said resins are in themselves flame retardant additives, so that they have a dual function in the polymeric compositions; to stabilize the flame retardant HBCD against heat, and to contribute to the flame retardancy of the polymeric composition. On the other hand, rendering HBCD more thermally stabilized by simply increasing the amounts of the polyepoxide stabilizer, although theoretically possible, cannot be accomplished without reducing the flame retardancy properties of the HBCD composition, since, as it is known, said polyepoxide resins are highly flammable.

The invention also provides polymeric compositions, particularly based on or comprising polystyrene, styrene copolymers, polyolefins, PVC and rubbers. which comprise at least one halogenated epoxy resin and HBCD in an aggregate amount of at least 0.5% and preferably from 2 to 30% of the polymeric composition. The polymeric compositions of the invention may further comprise other FR compounds, as hereinbefore set forth. Further, they may comprise plastics additives other than fire retardants, such as thermal stabilizers which may be selected from phosphites, phenols and polyols or combinations thereof, antioxidants, lubricants, pigments, impact modifiers, processing aids, peroxides or other initiators, fillers, glass or carbon fiber reinforcements, plasticizers and other additives currently used in plastics compositions. Typically, the halogen content in the FR compositions is between 12 and 71% and in the polymeric compositions it is between 0.3 and 22%.

### Detailed description of Preferred Embodiments

Following examples illustrate preferred embodiments of the invention.

### Example 1

A Mixture of HBCD, manufactured and sold by Dead Sea Bromine Group under the denomination FR-1206, with different stabilizers, have been prepared and their thermal stability has been tested by determining, by dynamic thermogravimetric analysis under air, at a heating rate of 10°C per minute, the temperatures at which weight losses of 5% and 10% have occurred to evaluate their efficiency. Table 1 shows clearly the much better thermal stability of the mixture comprising a brominated epoxy resin with an average molecular weight of 1000 g/mole and an epoxy equivalent of 500 g/eq and also of the mixture comprising a brominated epoxy crystallized with an average molecular weight of 700 g/mole and an epoxy equivalent of 350 g/eq as hereinbefore mentioned, in comparison with the mixtures comprising prior art thermal stabilizers. In this Table FR-1206 indicates a HBCD manufactured and sold by Dead Sea Bromine Group and the polyepoxide compound is characterized by an epoxy equivalent weight of 108 g/eq and is produced by Nissan.

It is seen that the mixture stabilized by the brominated epoxy resin is about 15 to 20°C more stable than the others. Moreover, it should be observed that the fact that both systems based upon an epoxy stabilization have a similar epoxy content in the composition confirms the surprising thermal stablization effect obtained by the use of the brominated epoxy resin. As the price of the polyepoxide compound used in this example is about US$20/kg (August 1995) while the price of the brominated epoxy resin according to the invention is only US$4/kg, another advantage of the invention is that the mixture stabilized by the brominated epoxy resin is less expensive.

**Table 1:**

| **DYNAMIC THERMOGRAVIMETRIC ANALYSIS** (Under air 10°C/min.) | | | | |
|---|---|---|---|---|
| Stabilizer | | | | |
| Type of Stabilizer | polyepoxide compound | lead dibasic phthalate | brominated epoxy resin | crystallized brominated epoxy resin |
| epoxy equivalent (g/eq) | 108 | | 500 | 350 |

| Composition | | | | |
|---|---|---|---|---|
| FR-1206 (≡ HBCD) content (%) | 93 | 95 | 70 | 70 |
| stabilizer content in the composition (%) | 7 | 5 | 30 | 30 |
| | | | | |
| Bromine content (%) | 68.8 | 70.3 | 66.5 | 66.2 |
| epoxy content (mole/100g) | 0.07 | | 0.06 | 0.085 |

| Thermal Stability | | | | |
|---|---|---|---|---|
| 5% weight loss (T, °C) | 240 | 240 | 260 | 265 |
| 10% weight loss (T, °C) | 243 | 250 | 265 | 270 |

### Example 2

The same FR compositions of Example 1 have also been compared by isothermal thermogravimetric analysis, evidencing once again a spectacular improvement for mixture of HBCD stabilized by a low average molecular weight brominated epoxy resin, according to the invention. This is shown in the following Table 2. In this Table FR-1206, brominated epoxy resin, crystallized brominated epoxy resin and polyepoxide compound have the same meanings as in Table 1.

**Table 2:**

| **ISOTHERMAL THERMOGRAVIMETRIC ANALYSIS** (Under air) | | | | |
|---|---|---|---|---|
| Stabilizer | | | | |
| Type of Stabilizer | polyepoxide compound | lead dibasic phthalate | brominated epoxy resin | crystallized brominated epoxy resin |
| epoxy equivalent (g/eq) | 108 | | 500 | 350 |

| Composition | | | | |
|---|---|---|---|---|
| FR-1206 (≡ HBCD) content (%) | 93 | 95 | 70 | 70 |
| stabilizer content in the composition (%) | 7 | 5 | 30 | 30 |
| | | | | |
| Bromine content (%) | 68.8 | 70.3 | 66.5 | 66.2 |
| epoxy content (mole/100g) | 0.07 | | 0.06 | 0.085 |

| Thermal Stability at T=220°C | | | | |
|---|---|---|---|---|
| weight loss after 20 min (%) | 55 | 29 | 2.0 | 1.5 |

| Thermal stability at T=230°C | | | | |
|---|---|---|---|---|
| weight loss after 20 min (%) | 82 | * | 26.5 | 2.0 |

| | | | | |
|---|---|---|---|---|
| *: not checked | | | | |

### Example 3

The following example shows a comparison of the efficiency, as thermal stabilizers, of several brominated epoxy resins with increasing the average molecular weight and at various loadings. Table 3 summarizes the results. In Table 3 the denominations FR-1206 has the same meanings as in Table 1, brominated epoxy resin type I refers to brominated epoxy resin having an epoxy equivalent of 500 g/eq as in Table 1 and brominated epoxy resin type II has an average molecular weight of 1600 g/mole and an epoxy equivalent of 800 g/eq.

**Table 3:**

| **ISOTHERMAL THERMOGRAVIMETRIC ANALYSIS** (Under air) | | | | | |
|---|---|---|---|---|---|
| Stabilizer | | | | | |
| Type of Stabilizer | brominated epoxy resin type I | | | | brominated epoxy resin type II |
| epoxy equivalent (g/eq) | 500 | | | | 800 |

| Composition | | | | | |
|---|---|---|---|---|---|
| FR 1206 (≡ HBCD) content (%) | 85 | 80 | 75 | 70 | 70 |
| stabilizer content (%) | 15 | 20 | 25 | 30 | 30 |
| | | | | | |
| bromine content (%) | 70.2 | 69.0 | 67.7 | 66.5 | 66.5 |
| epoxy content (mole/100g) | 0.03 | 0.04 | 0.05 | 0.06 | 0.04 |

| Thermal stability at T=220°C | | | | | |
|---|---|---|---|---|---|
| weight loss after 20 min. (%) | 71 | 3 | 2 | 2 | 55 |

From the above results, it can be seen that the thermal stabilization effect is very dependent on the average molecular weight and/or the epoxy equivalent of the brominated epoxy resin, which must be low. A slight increase of the average molecular weight from 1000 g/mole to 1600 g/mole has a strong detrimental effect on the weight loss under isothermal thermogravimetric analysis.

It can also be seen that at least 15% of a brominated epoxy resin of the right average molecular weight is necessary to obtain a very good thermal stability of the mixture.

### Example 4

In an isothermal thermogravimetric analysis as described in Example 3, a commercial grade of HBCD was compared with a mixture according to the invention, comprising a stabilizer of type I as defined in table 3. The results are shown in Table 4. CD 75 P is commercial grade of HBCD produced by the Great Lakes Chemical Company, which has a higher melting range than FR-1206. FR-1206 has the same meaning as in Table 1.

**Table 4:**

| **ISOTHERMAL THERMOGRAVIMETRIC ANALYSIS** (Under air) | | |
|---|---|---|
| Type of HBCD Composition, % | FR-1206 | CD 75 P |
| HBCD | 70 | 100 |
| Brominated epoxy resin type I | 30 | 0 |
| | | |
| Bromine content, % | 66.5 | 74 |
| | | |
| Thermal stability at 220°C | | |
| Weight loss after 20 minutes, % | 2 | 12 |

These results show that even high melting grades of HBCD are much less thermally stable than the mixtures of HBCD stabilized according to the invention.

### Example 5

Various grades of stabilized HBCD have been mixed with pigmented crystal polystyrene. These blends have been processed during 5 minutes in a Brabender plastograph heated at 220°C to control the color thermal stability. The molten blends were discharged from the plastograph and then compression molded to produce plates which were used for testing. The results shown in Table 5 confirm the better thermal stability of the mixture prepared according to the invention using a low average molecular weight brominated epoxy resin as the thermal stabilizer of HBCD. In the Table, the denominations brominated epoxy resin, polyepoxide compound and FR-1206 have the same meanings as in Table 1.

**Table 5:**

| **COMPOUNDING OF CRYSTAL POLYSTYRENE FLAME RETARDED BY STABILIZED GRADES OF HBCD** | | |
|---|---|---|
| Type of stabilizer FR composition, % | Brominated epoxy resin | Polyepoxide compound |
| FR-1206(HBCD) | 70 | 93 |
| Stabilizer | 30 | 7 |
| | | |
| Bromine content, % | 66.5 | 68.8 |
| | | |
| Plastic composition, % | | |
| Polystyrene crystal | 97 | 97 |
| stabilized HBCD | 3 | 3 |
| | | |
| Properties: | | |
| color thermal stability | very good | fair |
| flame retardancy UL 94, rating | V-2 | V-2 |

UL 94 is a standard flam retardancy test of the Underwriters Labratories and the V-2 rating is a measure according to said test.

### Preparation A

500 G of a commercial diglycidyl ether of tetrabromobisphenol A, made from TBBA epichlorohydrine, as hereinbefore set forth, sold by Dead Sea Bromine Group Ltd, hereinafter F-2200, and having the following analysis:

| | |
|---|---|
| bromine content - | 48.5% |
| EEW (epoxy equivalent weight) - | 343 g/eq |
| hydrolyzable chlorine - | 0.02% |
| softening point - | 53°C |

was heated to 90°C, whereby a thick, viscous mass was obtained. The mass was intimately mixed with one g of crystalline F-2200. The material was then spread onto a stainless steel tray to form a layer 3 mm thick. The tray was placed into an oven and heated to 90°C for 12 hours. The resulting product is a white crystalline solid with a softening point of 111°C and fusion heat of 38 J/G.

Its diffraction pattern was determined as follows. X-ray data were obtained with the Phillips Diffractometer PW 1050/70, using Cu Kα radiation, Graphite monochromator, 40 kv, 28 ma. The specific crystalline form of the product is characterized by the presence, in the diffraction pattern of the product, of the following seven strong diffraction peaks:

| **d-value, Å** |
|---|
| 9.85 |
| 9.66 |
| 4.12 |
| 4.06 |
| 4.04 |
| 3.96 |
| 3.91 |

### Example 6

Table 6 illustrates the properties of HBCD mixtures stabilized with the crystalline solid form of diglycidyl ether of tetrabromobisphenol A of Preparation A and with brominated epoxy resins having an epoxy equivalent as detailed below.

**Table 6:**

| **ISOTHERMAL THERMOGRAVIMETRIC ANALYSIS FOR HBCD STABILIZED WITH BROMINATED EPOXY RESINS** (Under air) | | | |
|---|---|---|---|
| Stabilizer | | | |
| epoxy equivalent (g/eq) | 343* | 500 | 800 |

| Composition | | | |
|---|---|---|---|
| HBCD content (%) | 85 | 85 | 85 |
| stabilizer content (%) | 15 | 15 | 15 |

| Thermal Stability at T=220°C | | | |
|---|---|---|---|
| weight loss after 20 min (%) | 3 | 71 | 72 |

| | | | |
|---|---|---|---|
| *from preparation A | | | |

It is evidenced from this results that a mixture of HBCD with the above-identified crystalline solid form of diglycidyl ether of tetrabromobisphenol A exhibits excellent thermal stability, even when the ratio of the HBCD and the stabilizer comprised therein is 85:15. It was impossible to dry mix HBCD with the low melting F-2200 as it sticks to the mixer.

### Example 7

Tables 7 and 8 illustrates a comparison between two types of thermally stabilized HBCD formulations.

One type is a composition according to the present invention consisting of 70% FR-1206 (HBCD, manufactured and sold by Dead Sea Bromine Group as hereinbefore defined) and 30% of the crystallized brominated epoxy resin of Preparation A. This type is hereinafter designated as FR 1206/crystBrEpox70:30. The second type is GREAT LAKES' heat stabilized HBCD version, hereinafter SP-75.

The property compared is the thermal stability of said compositions, and the parameters measured are indicated in the tables.

The results clearly reflect the superior thermal stability of a composition comprising HBCD and crystallized brominated epoxy resin of Preparation A as stabilizer, in a ratio of 70:30, over stabilized HBCD versions known in the art.

**Table 7:**

| **ISOTHERMAL THERMOGRAVIMETRIC ANALYSIS** (Under Air) | | |
|---|---|---|
| Type of stabilized HBCD | FR 1206/CrystBrEpox70:30 | SP-75 |
| Thermal Stability at 230°C : Time to 5% Weight Loss [min] | 13-15 | 5-6 |

**TABLE 8:**

| **DYNAMIC THERMOGRAVIMETRIC ANALYSIS** (Under Air) | | |
|---|---|---|
| Type of HBCD | HBCD/CrystBrEpox70:30 | SP-75 |
| Weight Loss %: Total at 300°C | 68 | 86 |
| Temp. to Weight Loss: 5% Weight Loss [°C] | 265 | 248 |

### Example 8

The following example illustrates the properties of a polymeric composition according to the present invention comprising the HBCD stabilized composition FR 1206/crystBrEpox70:30 of example 7, compared with a similar polymeric composition comprising GREAT LAKES' heat stabilized HBCD version, SP-75 defined in example 7.

The polymeric compositions are based on high impact polystyrene, hereinafter HIPS. The polymeric composition based on HIPS and FR 1206/CrystBrEpox70:30 will be designated hereinafter as HIPS + FR 1206/CrystBrEpox70:30. The Polymeric composition based on HIPS and SP-75 will be designated hereinafter as HIPS +SP-75.

The property compared was the heat stability during processing of such polymeric compositions, which is reflected by the intensity of the color developed during said processing: the higher the intensity, the lower the stability, as will be hereinafter explained. The parameter actually measured is the DE value, a dimensionless quantity which indicates the deviation of a given color from absolute white. Determining the DE value of a substance at different time serves, therefore, as an indication for changes in the color of said substance which are due to the processing it is subjected to, and thereby teaches about thermal stability in the course of processing.

The comparison is made as follows: subsequent to the compounding of few grades of stabilized HBCD with HIPS on BERSTORFF ZE25 twin-screw extruder having L/D (length/diameter) ratio of 32:1 at a mild temperature not exceeding 210°C, the compounds thus obtained were injection molded on an ARBURG Allrounder injection molding machine, so as to comparatively assess the processing stability of said compounds at various temperatures, wherein the molding cycle was also halted for 5 minutes to lengthen the residence time of the materials melt in the barrel and later, the normal injection molding cycle was resumed. The intensity of the color development in specimens is considered as indicative of their heat stability under rigorous conditions, as explained above, but also the number of specimens needed to be injected to regain initial color serves as a parameter to that criterion. The aforementioned test is a simulation of a sudden stop of the machine for a while, an event that practically happens.

Color evaluation (initial and after sudden stop), considering DE value, were obtained in a CIELAB spectrophotometer type ACS Chroma QC Sphere Model with illuminant/observer D65/10'.

**Table 9:**

| **PROCESSING HEAT STABILITY AS PROJECTED BY COLOR DEVELOPMENT** | | |
|---|---|---|
| Composition % | HIPS+FR 1206/CrystBrEpox70:30 | HIPS+SP-75 |
| HIPS | 92.8% | 93.25% |
| Stabilized HBCD type | 4.5% | 4.2% |
| ANTIMONY TRIOXIDE | 2.25% | 2.1% |
| Processing Additives | 0.45% | 0.45% |
| Bromine Content % | 2.9% | 2.9% |
| Color Development | | |
| 240°C Initial | DE=12.4 | DE=16.5 |
| After 5 min Shutdown | DE=13.3 | DE=39.5 |
| 250°C Initial | DE=29.7 | NA* |
| After 5 min Shutdown | DE=47.4 | NA* |

| | | |
|---|---|---|
| * no specimens could be obtained due to total collapse of compound. | | |

The results obtained clearly demonstrate the advantage of the FR 1206/CrystBrEpox70:30 over the reference SP-75. At 240°C the HIPS+FR 1206/CrystBrEpox70:30 polymeric composition approximately maintained its initial color, whereas the color of the HIPS+SP-75 was drastically changed. At 250°C the difference between the two examined polymeric compositions is even sharper, as the HIPS+SP-75 polymeric composition has totally collapsed.

### Example 9

The following example examines the properties of polymeric compositions comprising the HBCD stabilized formulation, FR 1206/CrystBrEpox70:30 of example 7, or modification thereof, according to the present invention. It was found that further improvements in the thermal stability of FR 1206/CrystBrEpox70:30 formulation may be attained by the use of small amounts of secondary stabilizers complementary to the FR 1206/CrystBrEpox70:30.

The polymeric compositions were based on crystalline polystyrene, and the modified HBCD stabilized formulations comprised therein are characterized, as indicated above, by the presence of additives together with the basic formulation of FR 1206/CrystBrEpox70:30 of example 7. The following polymeric compositions were compared:
1) Crystalline polystyrene composition comprising FR 1206/CrystBrEpox70:30 of example 7.
2) Crystalline polystyrene composition comprising a formulation of FR1206/CrystBrEpox70:30 with ditrimethylol propane, Irganox 1010™ and Bis Phenol A, said three additional stabilizers are in 1:1:1 ratio, their total weight being about 2% of the FR1206/CrystBrEpox70:30 formulation. This formulation will be designated in the table as "FR1206/CrystBrEpox70:30 formulation I".
3) Crystalline polystyrene composition comprising a formulation of FR1206/CrystBrEpox70:30 with ditrimethylol propane, Irganox 1010™ and trisnonylphenyl phosphite, said three additional stabilizers are in 1:1:1 ratio, their total weight being about 2% of the FR1206/CrystBrEpox70:30 formulation. This formulation will be designated in the table as "FR1206/CrystBrEpox70:30 formulation II".

The above compositions were prepared on a BERSTORFF twin-screw extruder at a mild temperature profile not exceeding 210°C, and these were subsequently injection molded on an ARBURG Allrounder machine at various temperatures, and with 5 minute sudden stops, as described in the example 8, so as to evaluate the processing stability.

Color measurements, in terms of DE, were carried out on CIELAB Spectrophotometer type ACS Chroma QC illuminant/observer D65/10'.

**Table 10:**

| **IMPROVED PROCESSING STABILITY IN POLYSTYRENE OF FR 1206/CrystBrEpox70:30 MODIFIED FORMULATIONS** | | | | | | |
|---|---|---|---|---|---|---|
| **Composition %** | | | | | | |
| Crystalline Polystyrene | 98.0% | 94.1% | 98.0% | 94.1% | 98.0% | 94.1% |
| FR 1206/CrystBrEpox70:30 | 1.5% | 5.0% | --- | --- --- | --- | |
| FR1206/CrystBrEpox70:30 formulation I | --- | --- | 1.5% | 5.0% | --- | --- |
| FR1206/CrystBrEpox70:30 formulation II | --- | --- | --- | --- | 1.5% | 5.0% |
| Processing Additives | 0.45% | 0.9% | 0.45% | 0.9% | 0.45% | 0.9% |
| Color Development | | | | | | |
| 250°C Initial [DE] | 29.1 | 41.8 | 28.5 | 47.7 | 26.6 | 42.6 |
| After 5 min Shutdown [DE] | 31.2 | 48.9 | 32.0 | 47.0 | 28.3 | 45.0 |
| 260°C Initial [DE] | 35.5 | --- | 30.7 | --- | 34.9 | --- |
| After 5 min Shutdown [DE] | 48.0 | --- | 35.3 | --- | 38.8 | --- |

The results show that FR1206/CrystBrEpox70:30 formulation I improves the thermal stability of a polymeric composition comprising it, compared with a polymeric composition comprising FR1206/CrystBrEpox70:30 alone, at a temperature of 260°C, whereas FR1206/CrystBrEpox70:30 formulation II is superior to the basic formulation at 250°C.

While certain embodiments of the invention have been described by way of illustration, it will be apparent that the invention can be carried into practice by persons skilled in the art with many modifications, variations and adaptations, without departing from its spirit or exceeding the scope of the claims.

## Claims

1. Flame retardant compositions, comprising hexabromocyclododecane and at least one halogenated epoxy resin selected from among the group consisting of halogenated bisphenolic epoxy resins, halogenated phenol novolac epoxy resins, halogenated cresol novolac epoxy resins, halogenated resorcinol epoxy resins, halogenated hydroquinone epoxy resins, halogenated bisphenol A novolac epoxy resins, halogenated methyl resorcinol epoxy resins and halogenated resorcinol novolac epoxy resins, said halogenated epoxy resin having an epoxy equivalent in the range between 150 and 800 g/eq.

2. Composition according to claim 1, wherin the halogenated epoxy resin is a halogenated bisphenolic epoxy resin characterized by an average degree of polymerization in the range between 0 to 4.

3. Composition according to claim 2, wherein the halogenated bisphenolic epoxy resins are selected from among the group consisting essentially of dibromobisphenol A, tetrabrombisphenol A, dichloro-bisphenol A, tetrachlorobisphenol A, dibromobisphenol F, tetrabromobisphenol F, dichlorobisphenol F, tetrachlorbisphenol F, dibromobisphenol S, tetrabromobisphenol S epoxy resins.

4. Composition according to claim 3, wherein the halogenated epoxy resin is represented by the general formula 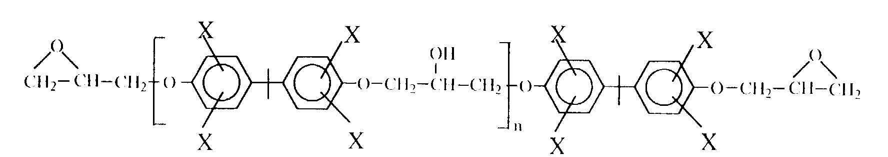 wherein n designates the average degree of polymerization, X is halogen , said resin having an average molecular weight not higher than and preferably lower than 1600 g/mole, and wherein the value of n is such that the said molecular weight is not exceeded.

5. Composition according to claim 4, wherein n is comprised between 0 and 2, inclusive.

6. Composition according to claim 5, wherein the average molecular weight of the halogenated epoxy resin is comprised between 300 g/mole and 1500 g/mole.

7. Composition according to any one of claims 4 to 6 wherein the halogenated epoxy resin is tetrabromobisphenol A diglycidyl ether, having the general formula

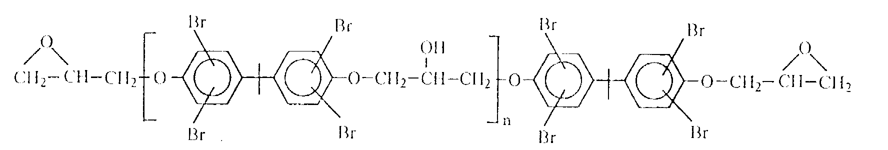

8. Composition according to claim 7 wherein the halogenated epoxy resin, tetrabromobisphenol A diglycidyl ether of the general formula 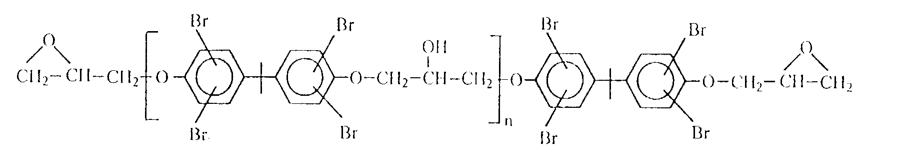 wherein n is comprised between 0 and 0.2, is in a crystalline form having an average molecular weight of about 700 g/mole and an epoxy equivalent weight of 320 to 380 g/eq, and characterized by the presence, in the diffraction pattern, of the following seven strong diffraction peaks:
| **d-value, Å** |
|---|
| 9.85 |
| 9.66 |
| 4.12 |
| 4.06 |
| 4.04 |
| 3.96 |
| 3.91 |
and by a softening point of about 100°C to 120°C

9. Composition according to claim 1, comprising at least 5% of the halogenated epoxy resin.

10. Composition according to claim 1, comprising from 10 to 60% of the halogenated epoxy resin and from 40 to 90% of HBCD.

11. Composition according to claims 8 and 10, comprising about 30% of the halogenated epoxy resin and about 70% of HBCD.

12. Composition according to claim 1, further comprising fire retardant synergists.

13. Composition according to claim 12, wherein the other FR synergists are chosen from among antimony trioxide, zinc borates, and magnesium oxide or hydroxide.

14. Composition according to claim 12, wherein the aggregate amount of halogenated epoxy resins and HBCD is at least 20% and preferably between 25 and 90% of the total weight of the composition.

15. Composition according to claim 14, wherein the aggregate amount of halogenated epoxy resins and HBCD is between 30 and 80% of the total weight of the composition.

16. Composition according to claim 12, wherein the halogenated epoxy resins and HBCD will be in the relative proportion of at least 5/95 and preferably from 10/90 to 60/40.

17. Composition according to claim 1, wherein the halogen is bromine, the content of which is between 12 and 71 % of the composition.

18. Polymeric compositions, comprising a flame retardant composition according to claim 1, in an amount of at least 0.5% of the polymeric composition.

19. Polymeric compositions according to claim 18, comprising a flame retardant composition according to claim 1, in an amount from 2 to 30% of the polymeric composition.

20. Polymeric compositions according to claim 18, further comprising additional conventional flame retardant additives.

21. Polymeric compositions according to claim 18, further comprising plastics additives other than fire retardants.

22. Polymeric compositions according to claim 21, wherein the additives are chosen from among thermal stabilizers, antioxidants, lubricants, pigments, impact modifiers, processing aids, peroxides and other initiators, fillers, glass or carbon fiber reinforcements, and plasticizers.

23. Polymeric compositions according to claim 18, comprising polymers chosen from among polystyrene, styrene copolymers, polyolefins, PVC and rubbers.

24. Polymeric composition according to claims 11, 20 and 23, wherein the polymer is high impact polystyrene and the fire retardant synergist is antimony trioxide.

25. Polymeric composition according to claims 11, 22 and 23, wherein the polymer is crystalline polystyrene and the additives are thermal stabilizers selected from among phosphites, phenols and polyols or combinations thereof.

26. Polymeric compositions according to claim 25, wherein the thermal stabilizers are ditrimethylol propane, bis phenol A, trisnonylphenyl phosphite and Irganox 1010™.

27. Polymeric composition according to claim 18, wherein the halogen is bromine, the content of which is in the range between 0.3 to 22% of the polymeric composition.

28. Use of a halogenated epoxy resin having the general formula: 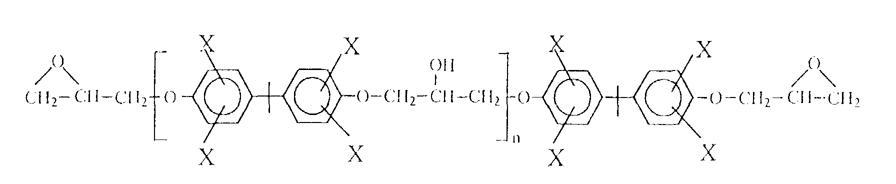 wherein n designates the average degree of polymerisation, X is halogen, said resin having an average molecular weight not higher than and preferably lower than 1600 g/mole, and wherein the value of n is such that the said average molecular weight is not exceeded, as thermal stabilizer of hexabromocyclododecane.

29. Use of a halogenated epoxy resin as defined in claim 28 wherein n is comprised between 0 and 2, as thermal stabilizer of hexabromocyclododecane.

30. Use of a halogenated epoxy resin as defined in claim 28, as active component and thermal stabilizer of a flame retardant composition comprising hexabromocyclododecane.

31. Use of a halogenated epoxy resin according to any one of claims 28 to 30, wherein the halogen is bromine.

32. Use of a halogenated epoxy resin according to claim 31, wherein said resin is as recited in claim 8.

## Patentansprüche

1. Flammenhemmende bzw. flammwidrige Zusammensetzungen, die Hexabromcyclododecan und mindestens ein halogeniertes Epoxyharz enthalten, das ausgewählt wird aus der Gruppe, die beseht aus halogenierten bisphenolischen Epoxyharzen, halogenierten Phenol-Novolak-Epoxyharzen, halogenierten Kresol-Novolak-Epoxyharzen, halogenierten Resorcin-Epoxyharzen, halogenierten Hydrochinon-Epoxyharzen, halogenierten Bisphenol A-Novolak-Epoxyharzen, halogenierten Methylresorcin-Epoxyharzen und halogenierten Resorcin-Novolak-Epoxyharzen, wobei das genannte halogenierte Epoxyharz ein Epoxy-Aquivalent in dem Bereich zwischen 150 und 800 g/Äqu. aufweist.

2. Zusammensetzung nach Anspruch 1, in der das halogenierte Epoxyharz ein halogeniertes bisphenolisches Epoxyharz ist, das durch einen durchschnittlichen Polymerisationsgrad in dem Bereich zwischen 0 und 4 charakterisiert ist.

3. Zusammensetzung nach Anspruch 2, in der die halogenierten bisphenolischen Epoxyharze ausgewählt werden aus der Gruppe, die besteht im wesentlichen aus Dibrombisphenol A-, Tetrabrombisphenol A-, Dichlorbisphenol A-, Tetrachlorbisphenol A-, Dibrombisphenol F-, Tetrabrombisphenol F-, Dichlorbisphenol F-, Tetrachlorbisphenol F-, Dibrombisphenol S- und Tetrabrombisphenol S-Epoxyharzen.

4. Zusammensetzung nach Anspruch 3, in der das halogenierte Epoxyharz dargestellt wird durch die allgemeine Formel 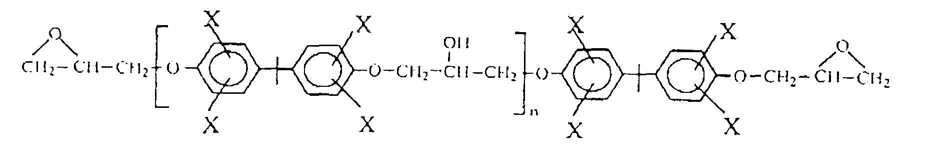 worin n für den durchschnittlichen Polymerisationsgrad steht und X für Halogen steht,
wobei das genannte Harz ein durchschnittliches Molekulargewicht von nicht höher als und vorzugsweise niedriger als 1600 g/mol aufweist und der Wert von n so ist, daß das genannte Molekulargewicht nicht überschritten wird.

5. Zusammensetzung nach Anspruch 4, in der n für eine Zahl zwischen 0 und einschließlich 2 steht.

6. Zusammensetzung nach Anspruch 5, in der das durchschnittliche Molekulargewicht des halogenierten Epoxyharzes zwischen 300 und 1500 g/mol liegt.

7. Zusammensetzung nach einem der Ansprüche 4 bis 6, in der das halogenierte Epoxyharz ein Tetrabrombisphenol A-diglycidylether mit der folgenden allgemeinen Formel ist

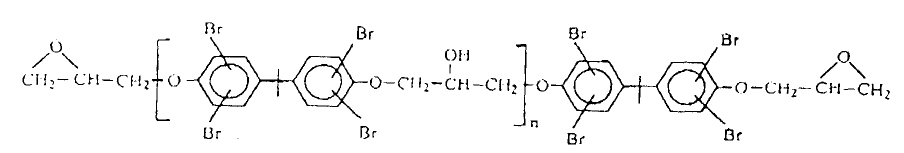

8. Zusammensetzung nach Anspruch 7, in der das halogenierte Epoxyharz ein Tetrabrombisphenol A-diglycidylether der allgemeinen Formel ist 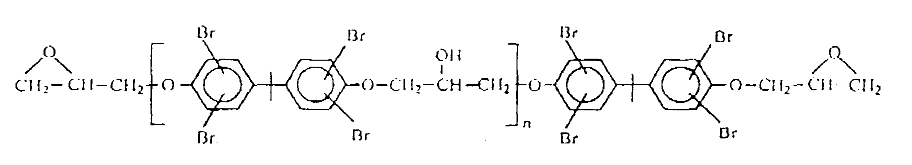 worin n für eine Zahl zwischen 0 und 0,2 steht,
der in einer kristallinen Form mit einem durchschnittlichen Molekulargewicht von etwa 700 g/mol und mit einem Epoxy-Äquivalentgewicht von 320 bis 380 g/Äqu. vorliegt und der durch die folgenden sieben starken Beugungspeaks in dem Beugungsdiagramm charakterisiert ist:
| D-Wert. Å |
|---|
| 9,85 |
| 9,66 |
| 4,12 |
| 4,06 |
| 4,04 |
| 3,96 |
| 3,91 |
und der einen Erweichungspunkt von etwa 100 bis 120°C aufweist.

9. Zusammensetzung nach Anspruch 1, die mindestens 5 % halogeniertes Epoxyharz umfaßt.

10. Zusammensetzung nach Anspruch 1, die 10 bis 60 % halogeniertes Epoxyharz und 40 bis 90 % HBCD umfaßt.

11. Zusammensetzung nach den Ansprüchen 8 und 10, die etwa 30 % halogeniertes Epoxyharz und etwa 70 % HBCD umfaßt.

12. Zusammensetzung nach Anspruch 1, die außerdem flammwidrig machende Synergisten enthält.

13. Zusammensetzung nach Anspruch 12, in der die weiteren FR-Synergisten ausgewählt werden aus Antimontrioxid, den Zinkboraten und Magnesiumoxid oder -hydroxid.

14. Zusammensetzung nach Anspruch 12, in der die Gesamtmenge an halogenierten Epoxyharzen und HBCD mindestens 20 %, vorzugsweise 25 bis 90 % des Gesamtgewichts der Zusammensetzung beträgt.

15. Zusammensetzung nach Anspruch 14, in der die Gesamtmenge an halogenierten Epoxyharzen und HBCD zwischen 30 und 80 % des Gesamtgewichts der Zusammensetzung liegt.

16. Zusammensetzung nach Anspruch 12, in der die halogenierten Epoxyharze und HBCD in einem relativen Mengenverhältnis von mindestens 5/95, vorzugsweise von 10/90 bis 60/40, vorliegen.

17. Zusammensetzung nach Anspruch 1, in der das Halogen Brom ist, dessen Gehalt zwischen 12 und 71 % der Zusammensetzung beträgt.

18. Polymere Zusammensetzungen, die eine flammenhemmende bzw. flammwidrige Zusammensetzung nach Anspruch 1 in einer Menge von mindestens 0,5 % der polymeren Zusammensetzung enthalten.

19. Polymere Zusammensetzungen nach Anspruch 18, die eine flammenhemmende bzw. flammwidrige Zusammensetzung nach Anspruch 1 in einer Menge von 2 bis 30 % der polymeren Zusammensetzung enthalten.

20. Polymere Zusammensetzungen nach Anspruch 18, die außerdem zusätzliche konventionelle flammwidrig machende Zusätze enthalten.

21. Polymere Zusammensetzungen nach Anspruch 18, die außerdem andere Kunststoff-Zusätze als flammwidrig machende Zusätze enthalten.

22. Polymere Zusammensetzungen nach Anspruch 21, in der die Zusätze ausgewählt werden aus Wärmestabilisatoren, Antioxidantien, Gleit- bzw. Schmiermitteln, Pigmenten, Impact-Modifizierungsmitteln, Verarbeitungshilfsmitteln, Peroxiden und anderen Initiatoren, Füllstoffen, Glas- oder Kohlefaser-Verstärkungsmitteln und Weichmachern.

23. Polymere Zusammensetzungen nach Anspruch 18, die Polymere umfassen, die ausgewählt werden aus Polystyrol, Styrol-Copolymeren, Polyolefinen, PVC und Kautschuken.

24. Polymere Zusammensetzung nach den Ansprüchen 11, 20 und 23, in der das Polymer ein hochschlagfestes Polystyrol ist und der flammwidrig machende Synergist Antimontrioxid ist.

25. Polymere Zusammensetzung nach den Ansprüchen 11, 22 und 23, in der das Polymer kristallines Polystyrol ist und die Zusätze Wärmestabilisatoren sind, die ausgewählt werden aus Phosphiten, Phenolen und Polyolen oder Kombinationen davon.

26. Polymere Zusammensetzungen nach Anspruch 25, in der die Wärmestabilisatoren Ditrimethylolpropan, Bisphenol A, Trisnonylphenylphosphit und Irganox 1010™ sind.

27. Polymere Zusammensetzung nach Anspruch 18, in der das Halogen Brom ist, dessen Gehalt in dem Bereich zwischen 0,3 und 22 % der polymeren Zusammensetzung liegt.

28. Verwendung eines halogenierten Epoxyharzes der allgemeinen Formel: 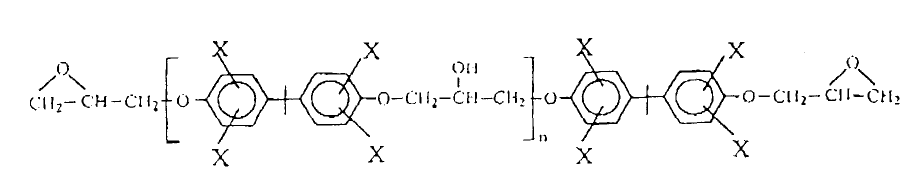 worin n für den durchschnittlichen Polymerisationsgrad steht und X für Halogen steht,
wobei das genannte Harz ein durchschnittliches Molekulargewicht von nicht höher als und vorzugsweise niedriger als 1600 g/mol aufweist und der Wert für n so ist, daß das durchschnittliche Molekulargewicht nicht überschritten wird, als Wärmestabilisator für Hexabromcyclododecan.

29. Verwendung eines halogenierten Epoxyharzes, wie es in Anspruch 28 definiert ist, worin n für eine Zahl zwischen 0 und 2 steht, als Wärmestabilisator für Hexabromcyclododecan.

30. Verwendung eines halogenierten Epoxyharzes, wie es in Anspruch 28 definiert ist, als aktive Komponente und Wärmestabilisator für eine flammenbeständige bzw. flammwidrige Zusammensetzung, die Hexabromcyclododecan enthält.

31. Verwendung eines halogenierten Epoxyharzes nach einem der Ansprüche 28 bis 30, bei dem das Halogen Brom ist.

32. Verwendung eines halogenierten Epoxyharzes nach Anspruch 31, wobei das genannte Harz ein solches nach Anspruch 8 ist.

## Revendications

1. Composition ignifuge comprenant de l'hexabromocyclododécane et au moins une résine époxy halogénée choisie parmi le groupe consistant en les résines époxy bisphénoliques halogénées, les résines époxy phénol novolac halogénées, les résines époxy crésol novolac halogénées, les résines époxy résorcinol halogénées, les résines époxy hydroquinone halogénées, les résines époxy bisphénol A novolac halogénées, les résines époxy méthylrésorcinol halogénées et les résines époxy résorcinol novolac halogénées, ladite résine époxy halogénée ayant un équivalent époxy dans la gamme de 150 à 800 g/eq.

2. Composition selon la revendication 1, où la résine époxy halogénée est une résine époxy bisphénolique halogénée, caractérisée par un degré moyen de polymérisation compris entre 0 et 4.

3. Composition selon la revendication 1, caractérisée en ce que les résines époxy bisphénoliques halogénées sont choisies parmi le groupe consistant essentiellement en les résines époxy de dibromobisphénol A, de tétrabromobisphénol A, de dichlorobisphénol A, de tétrachlorobisphénol A, de dibromobisphénol F, de tétrabromobisphénol F, de dichlorobisphénol F, de tétrachlorobisphénol F, de dibromobisphénol S, de tétrabromobisphénol S.

4. Composition selon la revendication 3, caractérisée en ce que ladite résine époxy halogénée est représentée par la formule générale suivante : 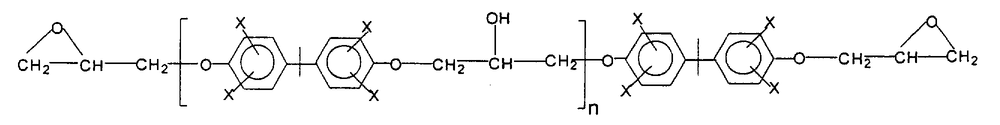 où n désigne le degré de polymérisation moyen, X est un halogène, en ce que ladite résine a un poids moléculaire moyen non supérieur et de préférence inférieur à 1600 g/mole, et en ce que la valeur de n est telle que l'on ne dépasse pas ledit poids moléculaire.

5. Composition selon la revendication 4, caractérisée en ce que n est compris entre 0 et 2, de façon inclusive.

6. Composition selon la revendication 5, caractérisée en ce que le poids moléculaire moyen de ladite résine époxy halogénée est compris entre 300 g/mole et 1500 g/mole.

7. Composition selon l'une quelconque des revendications 4 à 6, caractérisée en ce que ladite résine époxy halogénée est un éther de tétrabromobisphénol A diglycidyle, de formule générale :

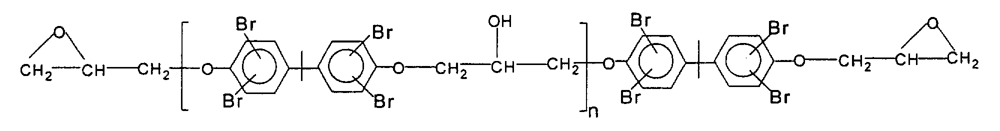

8. Composition selon la revendication 7, caractérisée en ce que la résine époxy halogénée, éther de tétrabromobisphénol A diglycidyle, de formule générale : 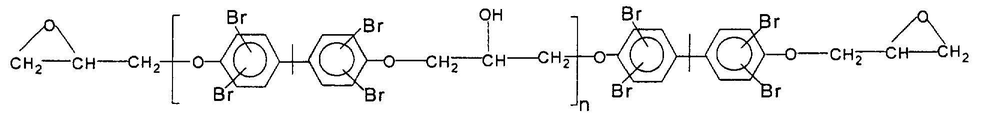 où n est compris entre 0 et 0,2, est une forme cristalline ayant un poids moléculaire moyen d'environ 700 g/mole et un poids équivalent époxy de 320 à 380 g/eq, et caractérisé par la présence, dans la figure de diffraction des sept pics de diffraction suivants :
| valeur de d en Å |
|---|
| 9,85 |
| 9,66 |
| 4,12 |
| 4,06 |
| 4,04 |
| 3,96 |
| 3,91 |
et par un point de ramollissement d'environ 100°C à 120°C.

9. Composition selon la revendication 1, comprenant au moins 5% d'une résine époxy halogénée.

10. Composition selon la revendication 1, comprenant de 10 à 60% de la résine époxy halogénée et de 40 à 90% de HBCD.

11. Composition selon les revendications 8 et 10, comprenant environ 30% de la résine époxy halogénée et environ 70% de HBCD.

12. Composition selon la revendication 1, comprenant en outre des synergistes ignifugeants.

13. Composition selon la revendication 12, caractérisée en ce que les autres synergistes ignifugeants sont choisis parmi le trioxide d'antimoine, les borates de zinc et les oxydes ou hydroxydes de magnésium.

14. Composition selon la revendication 12, caractérisée en ce que la quantité d'agrégat de résine époxy halogénée et de HBCD correspond au moins à 20% et préférentiellement à de 25 à 90% du poids total de la composition.

15. Composition selon la revendication 14, caractérisée en ce que la quantité d'agrégat de résine époxy halogénée est comprise entre 30 et 80% du poids total de la composition.

16. Composition selon la revendication 12, caractérisée en ce que la résine époxy halogénée et l'HBCD sont dans une proportion relative d'au moins 5/95 et préférentiellement de 10/90 à 60/40.

17. Composition selon la revendication 1, caractérisée en ce que l'halogène est le brome, dont la teneur correspond à 12 à 71% de la composition.

18. Compositions polymères, comprenant une composition ignifuge selon la revendication 1, en une quantité correspondant à au moins 0,5% de la composition polymère.

19. Compositions polymères selon la revendication 18, comprenant une composition ignifuge selon la revendication 1, en une quantité correspondant à de 2 à 30 % de la composition polymère.

20. Compositions polymères selon la revendication 18, comprenant en outre des additifs ignifugeants conventionnels additionnels.

21. Compositions polymères selon la revendication 18, comprenant en outre des additifs plastiques autres que des agents ignifugeants.

22. Compositions polymères selon la revendication 21, caractérisées en ce que lesdits additifs sont choisis parmi les stabilisants thermiques, les agents antioxydants, les lubrifiants, les pigments, les agents modificateurs de choc, les auxiliaires de traitement, les paroxydes ou d'autres initiateurs, les charges, les fibres de renforcement en verre ou en carbone et les plastifiants.

23. Compositions polymères selon la revendication 18, comprenant des polymères choisis parmi le polystyrène, les copolymères du styrène, les polyoléfines, le PVC et les caoutchoucs.

24. Compositions polymères selon les revendications 11, 20 et 23, caractérisées en ce que le polymère est un polystyrène-choc et le synergiste ignifugeant est le trioxide d'antimoine.

25. Compositions polymères selon les revendications 11, 22 et 23, caractérisées en ce que le polymère est un polystyrène-cristal et les additifs sont des stabilisants thermiques choisis parmi les phosphites, les phénols et les polyols ou leurs combinaisons.

26. Compositions polymères selon la revendication 25, caractérisées en ce que les stabilisants thermiques sont le ditriméthylolpropane, le biphénol A, le trisnonylphénylphosphite et l'Irganox 1010™.

27. Composition polymère selon la revendication 18, caractérisée en ce que l'halogène est le brome, dont la teneur est comprise entre 0,3 et 22% de la composition polymère.

28. Utilisation d'une résine époxy halogénée de formule générale : 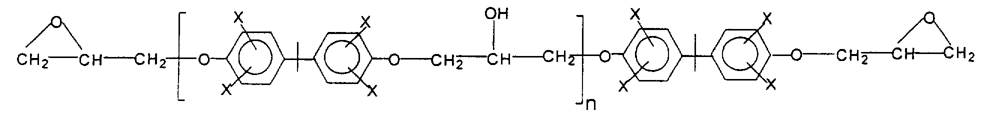 où n désigne le degré moyen de polymérisation, X est un halogène, caractérisée en ce que ladite résine époxy halogénée a un poids moléculaire moyen non supérieur et de préférence inférieur à 1600 g/mole, et en ce que la valeur de n est telle qu'on ne dépasse pas ledit poids moléculaire moyen, comme stabilisant thermique de l'hexabromocyclododécane.

29. Utilisation d'une résine époxy halogénée selon la revendication 28, caractérisée en ce que n est compris entre 0 et 2 comme stabilisant thermique de l'HBCD.

30. Utilisation d'une résine époxy halogénée selon la revendication 18, comme composé actif et stabilisant thermique d'une composition ignifuge comprenant de l'HBCD.

31. Utilisation d'une résine époxy halogénée selon l'une quelconque des revendications 28 à 30, caractérisée en ce que l'halogène est le brome.

32. Utilisation d'une résine époxy halogénée selon la revendication 31, caractérisée en ce que ladite résine est telle que citée dans la revendication 8.
